# EUROPEAN PATENT APPLICATION

(11) **EP 0 554 180 A2**
(43) Date of publication of application: **04.08.1993**
(21) Application number: 93400214.8
(22) Date of filing: 28.01.1993
(51) Int. Cl.: H04M 1/65, H04M 1/274

(54) **Message sending method and apparatus**

(30) Priority: 30.01.1992 KR 139192
(71) Applicant: LG ELECTRONICS INC., Seoul (KR)
(72) Inventor: Baik, Woon Kii, Kumi, Kyungsangbook-Do (KR)
(74) Representative: Fort, Jacques

(57) **Abstract**

Message sending method and apparatus capable of sending a recorded message by automatically making a telephone call at a set time and guaranteeing a privacy for the massage. The invention carries out a normal telephone conversation routine for controlling a telephone conversation to make and get a telephone call according to ON/OFF of a hook switch, a function key control routine for receiving a function key signal, outputting an information message based on the received function key signal, storing telephone numbers, selecting one from the stored telephone numbers, automatically dialling the selected telephone number, giving a private number, storing a message, playing back the stored message, and controlling setting of an automatic message sending mode, an automatic message sending routine for automatically dialing a stored telephone number at a set time in the automatic message sending mode and outputting a stored message at a telephone conversation enabling state, and a control routine in user's absence for discriminating whether the current mode is a mode for user's absence, storing a received message based on a received control code, playing back the stored received message and setting the automatic message sending mode.

## Description

### BACKGROUND OF THE INVENTION

### Field of the Invention

The present invention relates in general to a method of and an apparatus for sending a message through a telephone, and more particularly to message sending method and apparatus wherein a message, a telephone number and time are set so that a telephone call is automatically made at the desired time to send the message and a particular message is granted a private number so that the particular message is sent to a particular counterpart.

### Description of the Prior Art

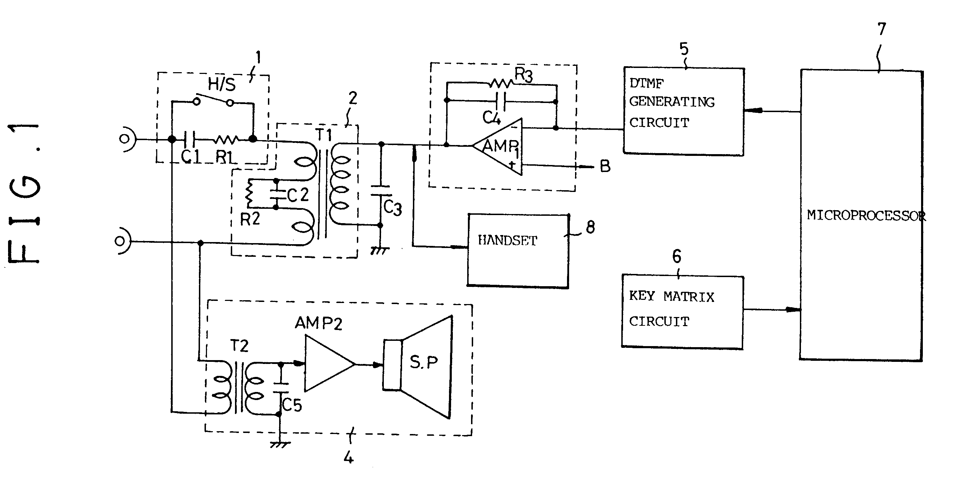

Referring to FIG. 1, there is shown a block diagram of a conventional telephone set. As shown in this drawing, the conventional telephone set comprises a hook switching circuit 1 for opening/closing a speech path from the telephone set to a telephone line according to OFF/ON of a hook switch H/S therein, a matching circuit 2 for matching transmission and reception signals through a matching transformer T1 therein with the telephone line connected through the hook switching circuit 1, a handset 8 for performing voice telephone conversation to the telephone line through the matching circuit 2, a key matrix circuit 6 for allowing the user to dial, a microprocessor 7 for decoding key signals from the key matrix circuit 6 to generate dialing data and controlling telephone conversation of the telephone set, a dual tone multi frequency (DTMF) generating circuit 5 for converting the dialing data from the microprocessor 7 into a DTMF signal, a transmitting amplifying circuit 3 for amplifying an output signal from the DTMF generating circuit 5 through an amplifier AMP1 therein and transmitting the amplified signal through the matching circuit 2, and a ring signal receiving circuit 4 for receiving a ring signal from the telephone line through a transformer T2 therein, amplifying the received ring signal through an amplifier AMP2 therein and outputting the amplified ring signal through a speaker S.P therein.

The operation of the conventional telephone set with the above-mentioned construction will hereinafter be described.

First, when the user lifts the handset 8 to make a telephone call, the hook switch H/S is closed. Under this condition, when the user pushes a telephone number to be called, through the key matrix circuit 6, the corresponding key signals are generated from the key matrix circuit 6 and then decoded into dialing data by the microprocessor 7. The dialing data from the microprocessor 7 is converted into a DTMF signal by the DTMF generating circuit 5 and then amplified by the transmitting amplifying circuit 3. The DTMF dialing signal amplified by the transmitting amplifying circuit 3 is transmitted through the matching circuit 2 to the telephone line. The transmitted DTMF dialing signal calls a corresponding telephone set through a telephone exchange. When the telephone call is got by the called telephone set, the speech path is formed, thereby allowing the user to have the voice telephone conversation.

On the other hand, when a telephone call is made by a counterpart, a 20Hz alternating current (AC) signal is transmitted being placed on a 48V direct current (DC) voltage being supplied from the telephone exchange through the telephone line. The AC signal is received through the transformer T2 in the ring signal receiving circuit 4 and then amplified by the amplifier AMP2 therein. The amplified signal is outputted as the ring signal (a telephone bell signal) through the speaker S.P in the ring signal receiving circuit 4.

At this time, when the user hears the ring signal and then lifts the handset 8, the hook switch H/S is closed, thereby causing the speech path to be formed between the matching circuit 2 and the telephone line. As a result, the user can have the voice telephone conversation through the handset 8.

However, the conventional telephone set has a disadvantage in that the telephone call cannot be got and any message cannot be sent in user's absence since the handset is lifted directly by the user when the telephone call is made or got.

In this connection, in the conventional telephone set, there has been provided an apparatus for recording and playing back a voice message to send/receive the voice message to/from a caller in user's absence. This telephone set is called an automatic answering telephone set. In the conventional automatic answering telephone set, when the telephone call is made in user's absence, the speech path is automatically formed and a pre-recorded voice message is sent to a caller under the control of the microprocessor. Also, a voice message from the caller is recorded under the control of the microprocessor. As a result, the voice message can be sent to the caller and the voice message from the caller can be received.

In the conventional automatic answering telephone set, the user pre-records the voice message (for example, "This is xxx. I am unable to answer your call at the moment. Please, leave your message after the beep") to be sent to the caller through the voice message recording/playback apparatus and then operates the telephone set to perform the automatic answering function. Thereafter when the telephone call is made in user's absence, the speech path is automatically formed under the control of the microprocessor so that the pre-recorded voice message is played back and then sent to the caller and the voice message from the caller is recorded by the voice message recording/playback apparatus. Upon returning home, the user plays back the caller's voice message recorded by the voice message recording/playback apparatus, so as to receive the caller's voice message.

Also, in the case where the speech path is formed between the automatic answering telephone set and an external telephone set and a private number preset by the user is then applied to the automatic answering telephone set through the external telephone set by the user, the recorded voice message is played back beginning with the recording start position by the voice message recording/playback apparatus and then sent to the user. Namely, when the user outside the house makes the telephone call to his own automatic answering telephone set in the house and then applies the preset private number thereto, the recorded voice message from the caller is played back by the voice message recording/playback apparatus in the automatic answering telephone set and then sent to the user. As a result, the user can receive through the external telephone set the voice message recorded by the voice message recording/playback apparatus in his own automatic answering telephone set.

Noticeably, in the conventional automatic answering telephone set, the voice message recording/playback apparatus may typically be a cassette tape recorder. In the cassette tape recorder, the playback of the recorded message is performed by rewinding a cassette tape to the recording start position. For this reason, a tedious time is required to play back the recorded message. Also, a long telephone conversation time is necessary to the playback of the recorded message through the external telephone set, resulting in an increase in the call charge.

The conventional automatic answering telephone set has another disadvantage in that the message to be sent is limited in contents. Namely, a particular message cannot be sent to a particular caller since the message is sent to all the callers.

Also, in the conventional automatic answering telephone set, the sending of the message to the caller and the recording of the message from the caller are performed only when the telephone call is made by the caller. This passive message sending disables an active message sending in which the telephone call is automatically made at the desired time and a particular message is sent to a particular counterpart.

### SUMMARY OF THE INVENTION

Therefore, the present invention has been made in view of the above problems, and it is an object of the present invention to provide message sending method and apparatus wherein a telephone call is automatically made at the time desired by the user so that a pre-recorded message can be sent to a particular counterpart, thereby enabling an active message sending.

It is another object of the present invention to provide message sending method and apparatus wherein a memory device is employed for recording/playback of a voice message and controlled by a microcomputer, so that recording/playback time of the message is shortened and a particular message is readily found for its playback.

It is yet another object of the present invention to provide message sending method and apparatus wherein a particular message is granted a private number for its recording/playback, so that the particular message is sent from/to a particular counterpart, thereby enabling maintenance of the privacy in the message sending.

In accordance with one aspect of the present invention, there is provided a message sending apparatus comprising: a microcomputer for controlling the whole operation of the apparatus including message recording/playback, automatic answering and telephone conversation; speech path switching means for opening/closing a speech path to a telephone line under a control of a hook switch therein or under the control of said microcomputer; matching means for matching transmission and reception signals with the telephone line when the speech path is formed by said speech path switching means; DTMF transmitter/receiver means for modulating a transmission signal from said microcomputer into a DTMF signal and demodulating a reception signal from said matching means into a digital signal; a handset for performing voice telephone conversation to the telephone line through said matching means; key matrix means for inputting dialing key signals and function key signals for message recording/playback control and applying the inputted key signals to said microcomputer; display means for displaying function states under the control of said microcomputer; absence switching means for applying an absence signal to said microcomputer according to a user's selection; memory means for recording and playing back a voice message under the control of said microcomputer; microphone input means for inputting a voice message through a microphone under the control of said microcomputer; voice message input means for converting voice messages inputted through said microphone input means, said matching means and said handset into digital signals and outputting the digital signals to said microcomputer; voice message output means for converting a voice message from said microcomputer into an analog signal and outputting the analog signal to said matching means; speaker output means for outputting an output signal from said voice message output means to a speaker under the control of said microcomputer; and ring signal detecting means for detecting a ring signal from the telephone line and outputting the detected ring signal to said microcomputer.

In accordance with another aspect of the present invention, there is provided a message sending method comprising: a normal telephone conversation routine for controlling a telephone conversation to make and get a telephone call according to ON/OFF of a hook switch; a function key control routine for receiving a function key signal, outputting an information message based on the received function key signal, storing telephone numbers, selecting one from the stored telephone numbers, automatically dialling the selected telephone number, giving a private number, storing a message, playing back the stored message, and controlling setting of an automatic message sending mode; an automatic message sending routine for automatically dialing a stored telephone number at a set time in the automatic message sending mode and outputting a stored message at a telephone conversation enabling state; and a control routine in user's absence for discriminating whether the current mode is a mode for user's absence, storing a received message based on a received control code, playing back the stored received message and setting the automatic message sending mode.

### BRIEF DESCRIPTION OF THE DRAWINGS

The above and other objects, features and advantages of the present invention will be more clearly understood from the following detailed description taken in conjunction with the accompanying drawings, in which:
FIG. 1 is a block diagram of a conventional telephone set;
FIG. 2 is a block diagram of a message sending apparatus in accordance with the present invention;
FIG. 3 is a flowchart illustrating a message sending method in accordance with the present invention;
FIGS. 4A and 4B are flowcharts illustrating controls for a telephone number storage, a telephone number selection and an automatic dialing in accordance with the message sending method of the present invention;
FIG. 5A is a flowchart illustrating a control for a message storage, a private number input and a message playback in accordance with the message sending method of the present invention;
PIG. 5B is a flowchart illustrating a setting of an automatic message sending mode in accordance with the message sending method of the present invention;
FIG. 6 is a flowchart illustrating an automatic message sending routine in accordance with the message sending method of the present invention;
FIG. 7 is a flowchart illustrating a control routine in user's absence in accordance with the message sending method of the present invention;
FIG. 8 is a table illustrating addresses for information massages applied to the message sending method of the present invention;

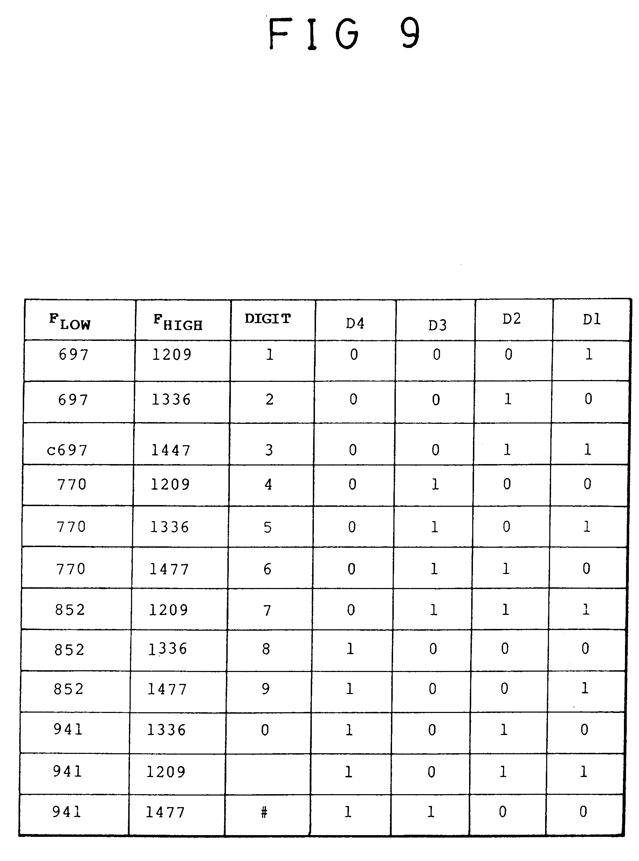

FIG. 9 is a table illustrating DTMF frequencies applied to the message sending method of the present invention; and
FIG. 10 is a schematic view explaining control codes applied to the message sending method of the present invention.

### DETAILED DESCRIPTION OF THE PREFERRED EMBODIMENTS

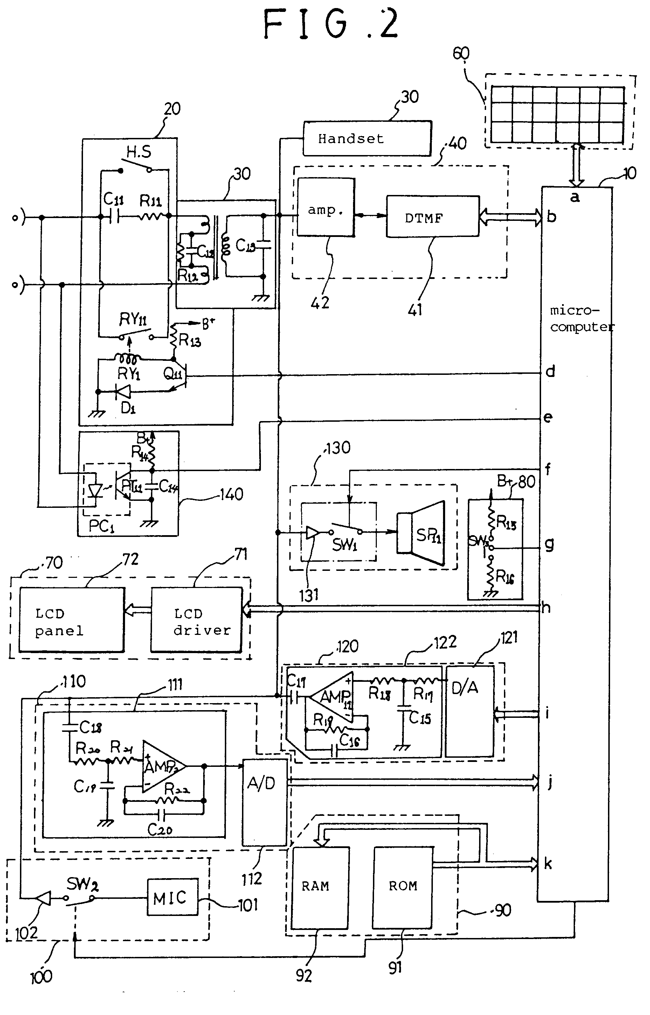

Referring to FIG. 2, there is shown a block diagram of a message sending apparatus in accordance with the present invention. As shown in this drawing, the message sending apparatus of the present invention comprises a microcomputer 10 for controlling the whole operation of the apparatus including message recording/playback, automatic answering and telephone conversation, a speech path switching circuit 20 for opening/closing a speech path to a telephone line under a control of a hook switch H.S therein or under the control of the microcomputer 10, a matching circuit 30 for matching transmission and reception signals with the telephone line when the speech path is formed by the speech path switching circuit 20, a DTMF transmitter/receiver circuit 40 for amplifying transmission and reception signals to/from the matching circuit 30 through an amplifier 42 therein and performing signal transmission and reception to/from the microcomputer 10 through a DTMF modulator/demodulator circuit 41 therein, a handset 50 for performing voice telephone conversation to the telephone line through the matching circuit 30, and a key matrix circuit 60 for inputting dialing key signals and function key signals for message recording/playback control and applying the inputted key signals to the microcomputer 10.

The message sending apparatus of the present invention also comprises a display unit 70 for displaying function states on a LCD panel 72 through a LCD driver 71 under the control of the microcomputer 10, an absence switching circuit 80 for applying an absence signal to the microcomputer 10 according to switching of an absence switch SW3 therein based on a user's selection, a memory unit 90 including a ROM 91 and a RAM 92, for recording and playing back a voice message under the control of the microcomputer 10, and a microphone input circuit 100 for inputting a voice message through a microphone 101 according to ON/OFF of a switch SW2 therein under the control of the microcomputer 10 and amplifying the inputted voice message through an amplifier 102 therein.

A voice message input circuit 110 is provided to amplify voice messages inputted through the microphone input circuit 100, the matching circuit 30 and the handset 50 through an amplifying circuit 111 therein, convert the amplified messages into digital signals through an analog/digital converter 112 therein and output the digital signals to the microcomputer 10.

A voice message output circuit 120 is also provided to convert a voice message from the microcomputer 10 into an analog signal through an analog/digital converter 121 therein, amplify the analog signal through an amplifying circuit 122 therein and output the amplified signal to the matching circuit 30.

A speaker output circuit 130 is also provided to amplify an output signal from the voice message output circuit 120 through an amplifier 131 therein and output the amplified signal through a switch SW1 to a speaker SP11 under the control of the microcomputer 10.

A ring signal detecting circuit 140 is also provided to detect a ring signal from the telephone line through a photocoupler PC1 therein and output the detected ring signal to the microcomputer 10.

In the speech path switching circuit 20, the hook switch H.S and a relay switch RY11 are connected in parallel to each other, in order to open/close the speech path to the telephone line. The relay switch RY11 is turned on or off according to excitation of a relay coil RY1 which is controlled by ON/OFF of a transistor Q11, a base of which is applied with a control signal from the microcomputer 10.

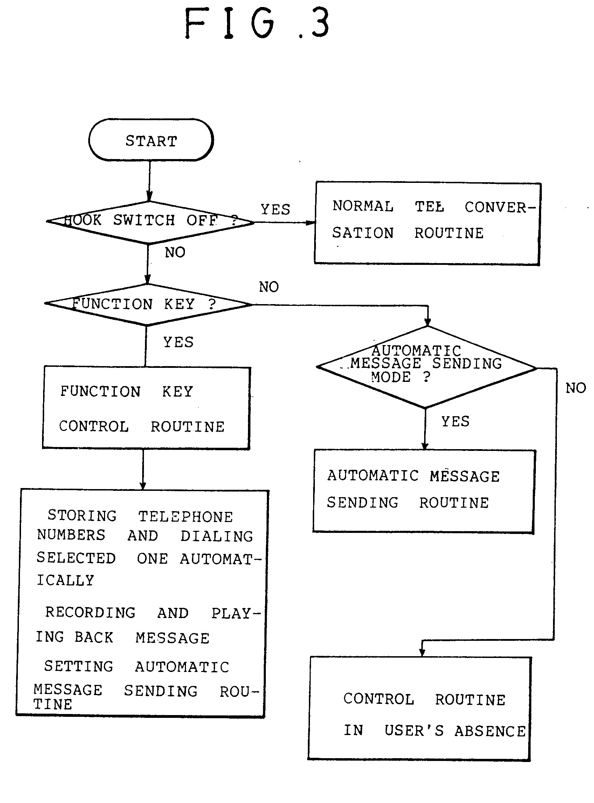

Referring to FIG. 3, there is illustrated a method for sending a message in accordance with the present invention. As shown in FIG. 3, the message sending method comprises a normal telephone conversation routine for controlling a telephone conversation to make and get a telephone call according to ON/OFF of the hook switch, a function key control routine for receiving a function key signal, outputting an information message based on the received function key signal storing telephone numbers, selecting one from the stored telephone numbers, automatically dialling the selected telephone number, giving a private number, storing a message, playing back the stored message, and controlling setting of the automatic message sending mode, an automatic message sending routine for automatically dialing a stored telephone number at a set time in the automatic message sending mode and outputting a stored message at a telephone conversation enabling state, and a control routine in user's absence for discriminating a mode for user's absence, storing a received message based on a received control code, playing back the stored received message and setting the automatic message sending mode.

The setting of the automatic message sending mode in the function key routine is controlled by a step of outputting an information message for inputting a message in response to receipt of a key signal about the automatic message sending mode and storing a received digital voice signal, a step of outputting an guide message for inputting a telephone number in response to completion of storing the message, displaying the inputted telephone number on the display circuit and storing it, a step of outputting an information message for inputting a message sending start time in response to completion of storing the telephone number, displaying the inputted time on the display circuit and storing it, and outputting an information message for informing that the automatic message sending mode has been set.

On the other hand, the automatic message sending routine comprises a step of counting down the set time when the automatic message sending mode has been set in the function key routine and checking whether the counted-down time is zero, a step of switching on the relay switch when the counted-down time is zero, to establish a speech path, and automatically dialing the set telephone number, a step of discriminating whether the current state is a telephone conversation enabling state with a counterpart called by the automatic dialing, a step of outputting the stored message via the telephone line at the telephone conversation enabling state, and a step of switching of the relay switch in response to completion of outputting the message and returning the procedure to a standby state.

For attempting predetermined times the telephone conversation at the telephone conversation disabling state upon the dialing, the step of discriminating the telephone conversation enabling state comprises a step of incrementing or cumulating the number of telephone conversation attempt times when the current state is a telephone conversation disabling state and switching off the relay switch, a step of checking whether a predetermined time has elapsed when the number of telephone conversation attempt times is less than a predetermined number and returning the procedure to the step of switching on the relay switch when the predetermined time has elapsed, to attempt the telephone conversation again, and a step of storing an information message for informing of disabling of the automatic message sending in a received message memory location when the number of telephone conversation attempt times is not less than the predetermined number and completing the automatic message sending mode.

On the other hand, the control routine in user's absence comprises a step of switching on the relay switch upon receipt of a ring signal at ON state of the absence switch SW3 to establish the speech path, a step of outputting an information message for informing of the user's absence, and a step of reading a control code from received DTMF data, storing and playing back a normal message, storing and playing back a specific message based on a private number and performing setting of the automatic message sending mode, according to the control code.

The control routine also comprises a step of counting the number of ring signals received at OFF state of the absence switch SW3, a step of controlling the overall operation in the normal telephone conversation mode when the hook switch H.S is switched to its OFF state before the number of ring signals is not less than a predetermined number and a step of switching on the relay switch RY11 when the hook switch H.S is not switched to its OFF state until the number of ring signals is not less than a predetermined number and performing the steps following the step of establishing the speech path.

Also, the step of controlling the operation according to the control code comprises a step of receiving a message in a normal automatic answering function mode when no control code has been received and storing it, a step of playing back and outputting the message received and stored when no control code was received, where a control code for playing back a received normal message has been received, a step of outputting an information message for inputting a private number where a control code for storing a message in a memory location for the private number has been received, outputting an information message for inputting a message when the inputted private number is identical to the given private number and storing a received message in a memory location corresponding to the private number, a step of outputting an information message for inputting a private number where a control code for playing back the message stored in the memory location for the private number has been received and playing back and outputting the message stored in the memory location for the private number when the inputted private number is identical to the given private number, and a step of outputting sequentially information messages for inputting a message, a telephone number and a time where a control code for setting the automatic message sending mode has been received, storing a received message, a received telephone number and a received time and setting remotely the automatic message sending mode.

Now, the operations of the apparatus according to the present invention will be described, in conjunction with respective functions of routines mentioned above.

First, the microcomputer 10 discriminates ON/OFF of the hook switch H.S. When the hook switch H.S is at its OFF state as the user grips the handset 50 and separates it from its telephone body for a telephone conversation, the microcomputer 10 prosecutes a normal telephone conversation routine. In the case shown in FIG. 2, a speech path is established when the hook switch H.S is switched on. Generally, such a hook switch is switched on when a handset is separated from its telephone body. At such an ON state of hook switch, a speech path is established. Hereinafter, accordingly, it will be described that the establishment of speech path is made when the hook switch H.S is switched at its OFF state.

On the other hand, the microcomputer 10 discriminates whether a function key input has been made, when the hook switch H.S is at its ON state, that is, when the handset 50 is normally coupled to its telephone body. When a function key input has been made, the microcomputer 10 prosecutes a desired routine. Where the absence switch SW3 of the absence switching circuit 80 is at its ON state, the microcomputer 10 also prosecutes the control routine in user's absence.

Operations based on the function key input include various routines for storing a telephone number, selecting one from telephone numbers stored, controlling an automatic dialing, inputting a message, inputting a private number, playing back a message stored, and controlling a automatic message sending function.

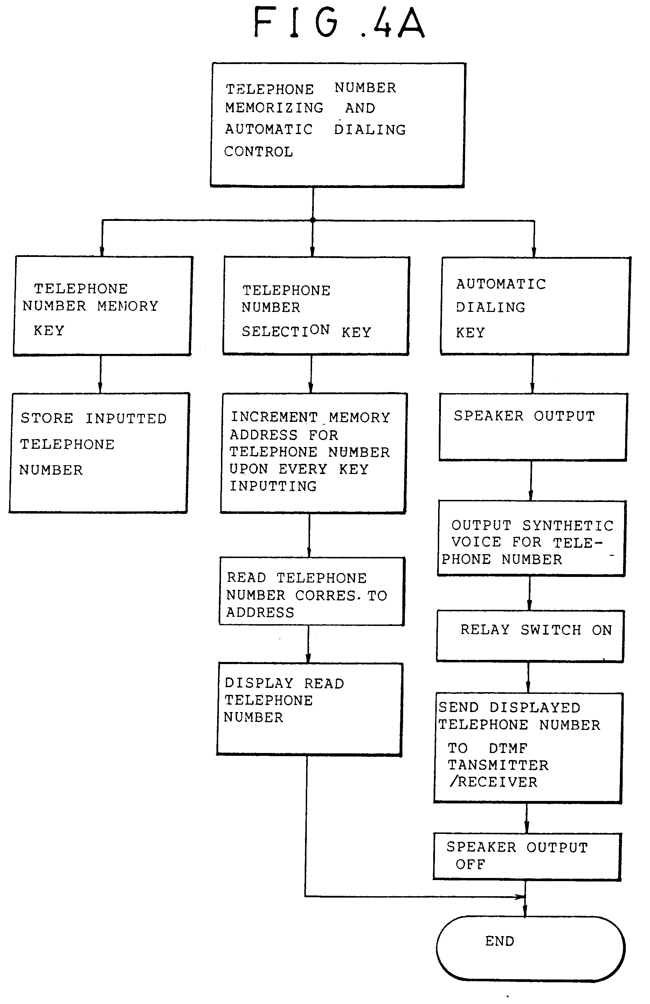

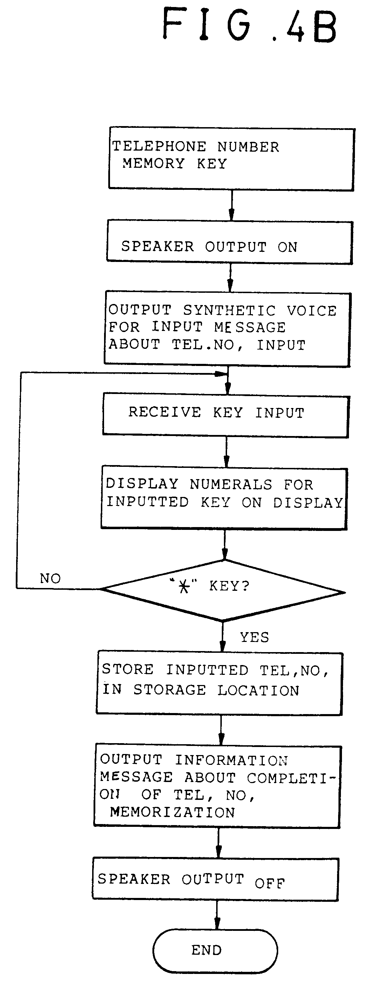

Upon receiving a telephone number memory key signal, the routine for storing a telephone number, selecting one from telephone numbers stored and automatically dialing it is carried out, to store a received telephone number, as shown in FIG. 4B.

Every time when a telephone number selection key signal is received, the microcomputer 10 increments an address for telephone number memory location of the RAM 92 of memory circuit 90. Thereafter, the microcomputer 10 reads data previously stored in the memory location corresponding to the incremented address and sends it to the display circuit 70. Thus, the user pushes a desired telephone number selection key and selects a desired telephone number from the stored telephone numbers until the telephone number is displayed on the LCD panel 72 of display circuit 70.

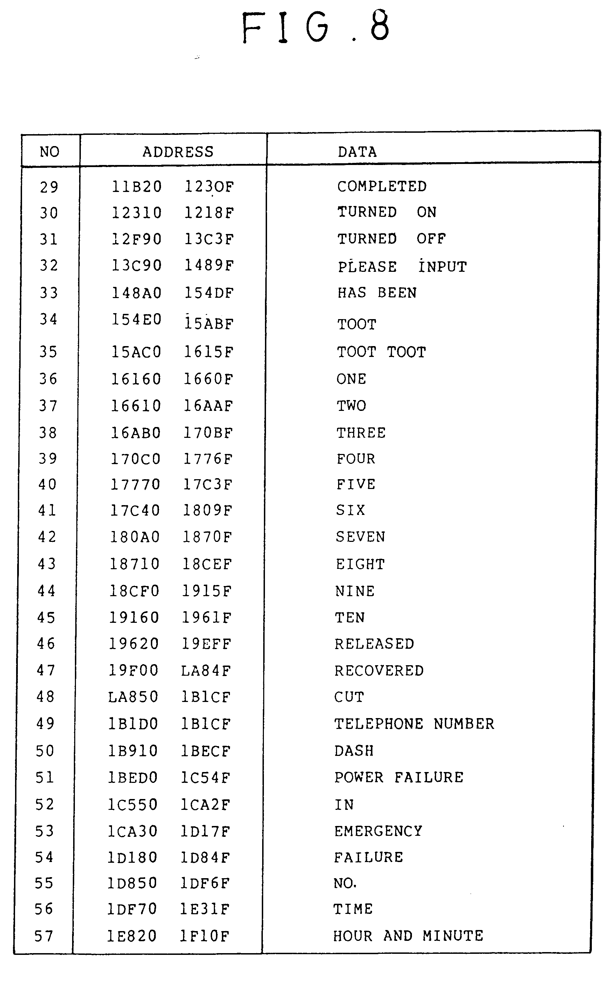

Upon receiving an automatic dialing key signal, the microcomputer 10 switches on the switch SW1 of the speaker output circuit 130 and outputs the telephone number selected by the user and displayed on the display circuit 70, in the form of a synthetic voice. In this case, the outputting of the synthetic voice for the telephone number is achieved by reading information message data corresponding to the addresses shown in FIG. 8. The synthetic voice data for telephone number is converted into an analog voice signal by the digital/analog converter 121. The analog voice signal is amplified in the amplifying circuit 122 and then sent to the speaker circuit 130.

Thereafter, the microcomputer 10 outputs a high level signal at the base of the transistor Q11 of speech path switching circuit 20, so that the transistor Q11 is turned on. As a result, an inverted loop of the relay coil RY11 is formed, thereby causing the relay coil RY11 to be excited. The excitation of relay coil RY11 makes the relay switch RY11 turn on so that a speech path via a telephone line is established.

The microcomputer then sends the telephone number displayed on the display circuit 70 to the DTMF transmitter/receiver circuit 40, so as to carry out the automatic dialing operation. That is, the telephone number data outputted from the microcomputer 10 is modulated into a DTMF signal by the DTMF modulator/demodulator circuit 41 and then amplified by the amplifying circuit 42. The amplified DTMF signal is sent to the telephone line side. Thus, the automatic dialing operation is accomplished.

The DTMF modulator/demodulator circuit 41 modulates the output data from the microcomputer 10 such as a telephone number into a composite frequency signal including a low frequency F_{LOW} and a high frequency F_{HIGH} and outputs it. The DTMF modulator/demodulator circuit 41 also demodulates the composite frequency signal received via the matching circuit 30 into digital data recognizable by the microcomputer 10 and sends it to the microcomputer 10.

Upon receiving a telephone number storing key signal, the microcomputer 10 switches on the switch SW1 of speaker output circuit 130 and then outputs an information message for inputting a telephone number, as shown in FIG. 4B.

Such an information message is previously stored in the memory circuit 90, based on an automatic answering control program. Examples of information messages are illustrated in FIG. 8. In case of an information message for inputting a telephone number, for example, an information message "please input a telephone number", an address '1D85O 1D84F' corresponding to a message "please input" and an address '13C9O 1489F' corresponding to a message "a telephone number" are generated. Then, data is read from memory locations of the RAM 92 of memory circuit 90 corresponding to the generated addresses and sent to the output circuit 120. The information message data is converted into an analog signal by the digital/analog converter 121, amplified by the amplifying circuit 122 and then sent to the speaker output circuit 130. The voice signal inputted at the speaker circuit 130 is amplified by the amplifier 131 and then sent to the speaker SP11 via the switch SW1 which is controlled by the microcomputer 10.

After such an information message outputting according to the above procedure, the microcomputer 10 receives a key input for a telephone number and displays the received telephone number on the LCD panel 132 of display circuit 130. Thereafter, the microcomputer 10 checks whether a '*'key signal has been received. When the '*'key signal has been received, the microcomputer 10 stores the received telephone number in a telephone number memory location of the RAM 92 of memory circuit 90, outputs an information message informing of the telephone number storage completion and shuts off the output of speaker SP11.

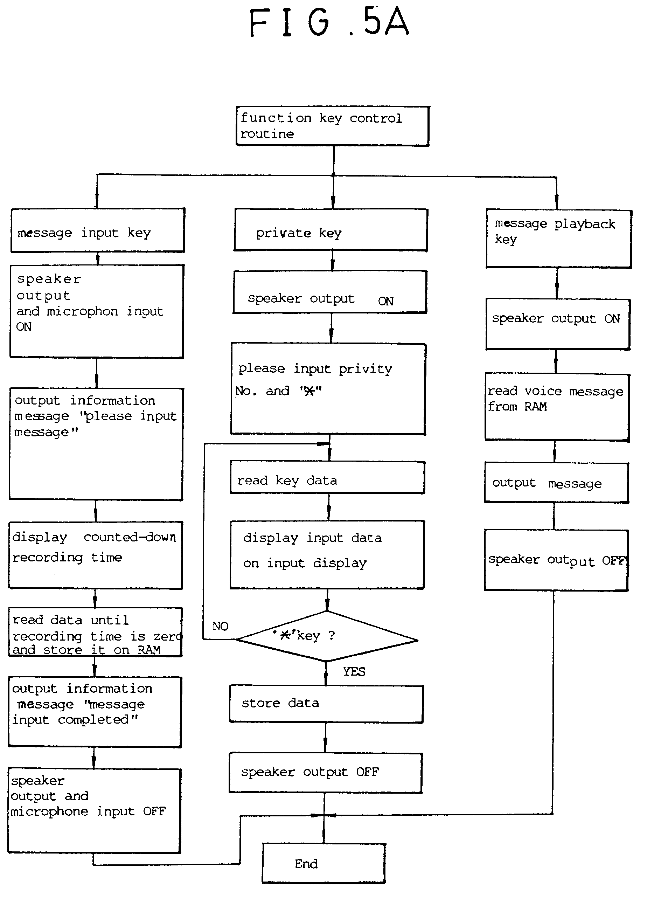

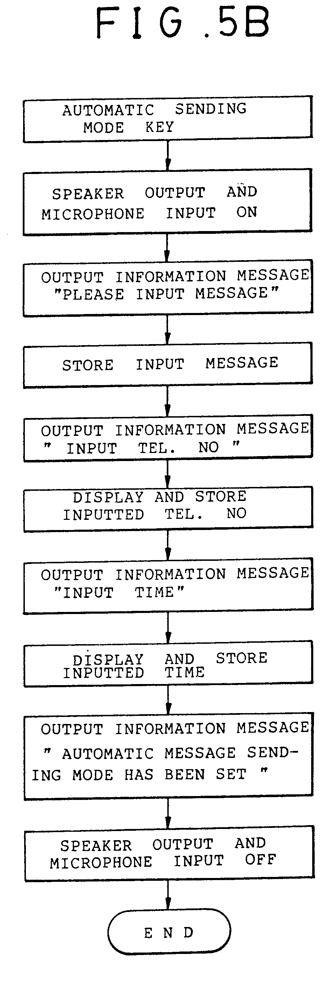

On the other hand, the message storage/playback control routine is carried out as shown in FIG. 5A, when the user pushes the message input key for recording a message to be sent. In this case, the microcomputer 10 switches on both the switch SW2 of microphone input circuit 100 and the switch SW1 of speaker output circuit 130 and then outputs an information message "please input a message". Thereafter, the microcomputer 10 displays the counted-down message recording time on the display circuit 70. That is, the message recording is controlled so that a message is inputted within a limited recording time.

As the user inputs subsequently a voice message through the microphone, the microcomputer 10 reads the voice data through the analog/digital converter 112 of voice message input circuit 110 and stores it in the memory circuit 90. When a predetermined message input time has elapsed, the microcomputer 10 outputs an information message "message inputting has been completed" and then switches off the microphone switch SW2 and the speaker output switch SW1.

Where a private number is given, the message playback car be possible only by a counterpart who knows the given private number. In this case, as the user pushes a private number key, the microcomputer 100 switches on both the switch SW2 of microphone input circuit 100 and the switch SW1 of speaker output circuit 130 and outputs an information message "please input a private number and '*'key". Thereafter, the microcomputer 10 reads a key signal or key signals from the key matrix circuit 60 and stores it or them in the memory circuit 90 as a private number, until the '*'key signal is inputted.

Once a private number is given after a message is inputted by pushing the message input key, the message can be played back only by inputting the private number.

Otherwise, the inputting of message may follow the giving of private number.

When the user pushes the message playback key for playing back a received message, the microcomputer 10 switches on the switch SW1 of speaker output circuit 130, reads received message data stored in the RAM 92 of memory circuit 90, and then sends it to the voice message output circuit 120. The voice data outputted from the microcomputer 10 is converted into an analog signal by the digital/analog converter 122, amplified by the amplifying circuit 121 and then sent to the speaker output circuit 130. In the speaker output circuit 130, the analog signal is amplified again by the amplifier 131 and then sent to the speaker SP11 via the switch SW1. Thus, the user can receive the voice message received and stored in his absence.

A message stored by giving a private number can be played back by pushing the message playback key and then pushing the private number. Accordingly, the user can receive a message from a specific counterpart who knows the private number. This guarantees a privacy of the message.

An automatic message sending mode may be set for automatically sending a message. The setting of the automatic message sending mode is achieved when the user pushes the automatic message sending key. As the automatic message sending key is pushed, the microcomputer 10 outputs an information message "please input a message". When the user inputs a message through the microphone in response to the information message, the microcomputer 10 stores the received message in an automatic message sen^S+25'25^^* ( location of the memory circuit, for a predetermined message inputting time. After completing the message storage, the microcomputer 10 outputs an information message "please input a telephone number. When the user inputs a telephone number in response to the information message, the microcomputer 10 stores the inputted telephone number and displays it on the display circuit 70. Thereafter, the microcomputer 10 outputs an information message "please input a time" . When the user inputs a time in response to the information message, the microcomputer 10 displays the inputted time on the display circuit 70 and stores it in the memory circuit 90. Subsequently, the microcomputer 10 outputs an information message "automatic message sending mode has been completed" and shuts off the inputs of the speaker and microphone. At this state, the microcomputer 10 is maintained at a standby state while checking whether the set time has elapsed.

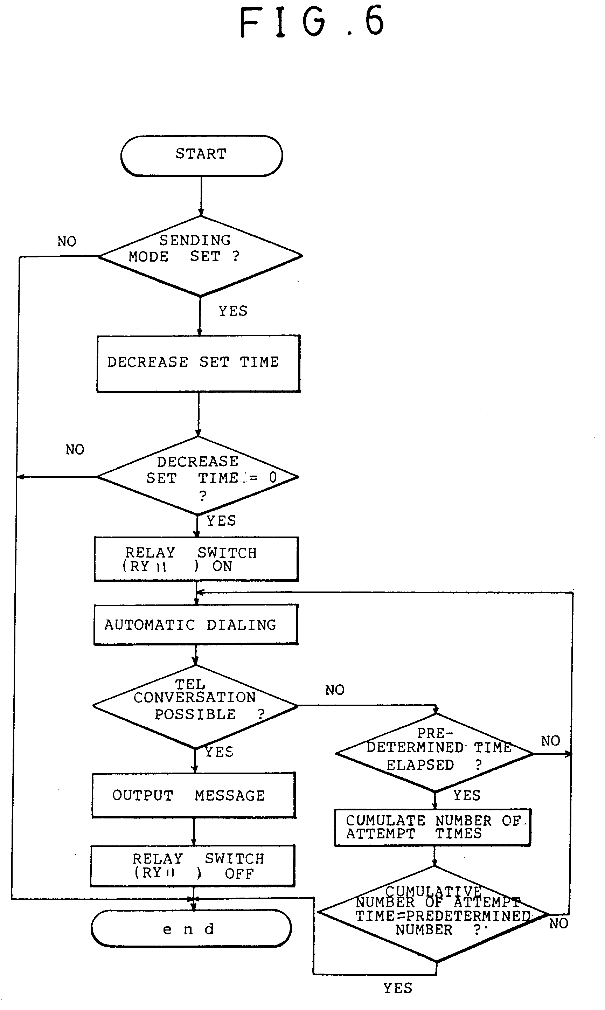

After completing the setting of automatic message sending mode, the microcomputer 10 prosecutes the automatic message sending routine, as shown in FIG. 6.

First, the microcomputer 10 checks the set time for the automatic message sending mode while counting down it. When the counted-down value for the set time is zero, the microcomputer 10 switches on the relay switch RY11, reads telephone number data previously set from the memory circuit 90 and sends it to the DTMF transmitter/receiver circuit 40, Accordingly, an automatic dialing is achieved for the set telephone number. Then, the microcomputer 10 checks whether a ring-back tone is received by the DTMF transmitter/receiver circuit 40, so as to discriminate whether the current state is a telephone conversation enabling state. When the current state is the telephone conversation enabling state as the counter part get the telephone call, the microcomputer 10 reads the stored automatic sending message from the memory circuit 90 and sends it to the voice output circuit 20. The message is converted into an analog signal by the voice output circuit 120 and then sent to the telephone line side via the matching circuit 30. Thus, the message sending is achieved. After completing the message sending, the microcomputer 10 switches off the relay switch RY11 to cut off the speech path and is then maintained at its standby state.

When the current state has been discriminated to be a telephone conversation disabling state, the microcomputer 10 increments the number of telephone conversation attempt times, switches off the relay switch RY11 and checks whether the number of telephone conversation attempt times is not less than a predetermined number. When the number of telephone conversation attempt times is less than the predetermined number, the microcomputer 10 also checks whether a predetermined time has elapsed. When the predetermined time has elapsed, the procedure is returned to the step following the step of switching on the relay switch, so as to attempt again the telephone conversation. On the other hand, when the number of telephone conversation attempt times is not less than the predetermined number, the microcomputer 10 stores an information message informing that the automatic message sending is impossible, in a message memory location of the memory circuit and completes the automatic message sending mode. Thus, the microcomputer 10 attempts predetermined times the telephone conversation based on the automatic message sending mode, until the telephone conversation enabling state is obtained.

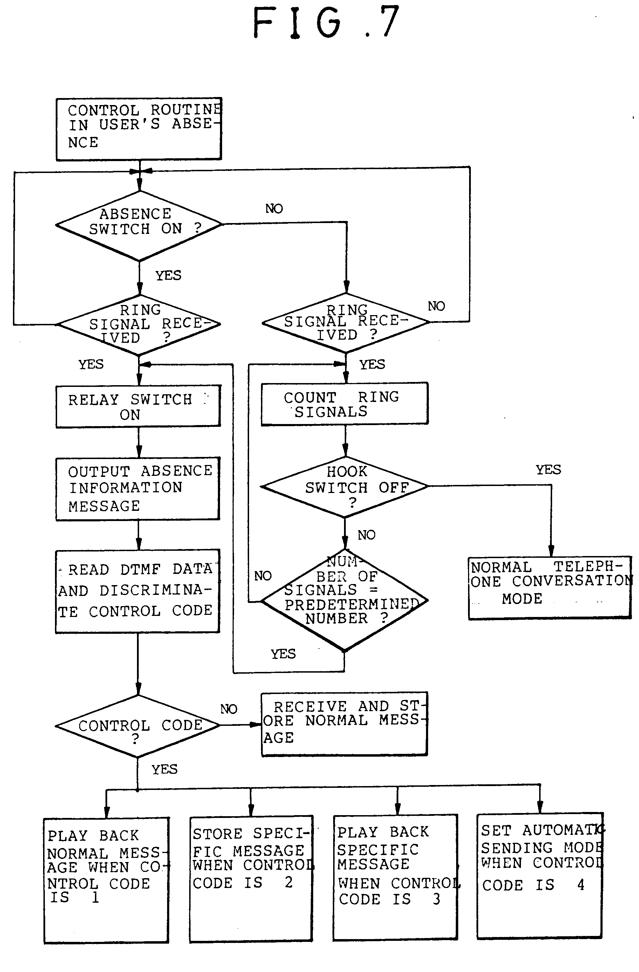

In order to carry out the routine for controlling the automatic answering in user's absence, the microcomputer 10 first discriminates whether the absence switch SW3 of the switching circuit 80 has been switched to its ON state, as shown in FIG. 7. When the absence switch SW3 is at its OFF state, the microcomputer 10 controls the telephone conversation, according to the switched state of the hook switch H.S. That is, when a ring signal is detected by the ring signal detecting circuit 40 at a standby state, as shown in FIG. 7, the microcomputer 10 counts the number of received ring signals and discriminates whether the hook switch H.S has been switched to its OFF state. When the hook switch H.S has ben switched to its OFF state before the number of received ring signals reaches a predetermined number, the microcomputer 10 carries out a control in normal telephone conversation mode. However, when the hook switch H.S is maintained at its ON state until the number of received ring signals is not less than the predetermined number, that is, when no telephone call is gotten, the microcomputer 10 carries out a control in the same manner as the case where the absence switch SW3 has been switched to its ON state.

Where the absence switch SW3 has been switched to its ON state, the microcomputer 10 discriminates whether a ring signal has been received at the standby state. When a ring signal has been received, the microcomputer 10 carries out a control in user's absence, until the number of received ring signals is not less than the predetermined number, in the same manner as the case where no telephone call is gotten.

For carrying out this control in user's absence, the microcomputer 10 switches on the relay switch RY11 and outputs an information message informing of the user's absence. Thereafter, the microcomputer 10 checks whether a control code has been received through the DTMF transmitter/receiver circuit 40. Herein, control codes are used for remotely play back a received message and send to the user when he makes a call for his home telephone, for recording a normally received message, or for setting the automatic message sending mode for recording a specific message and automatically sending it to a specific telephone number.

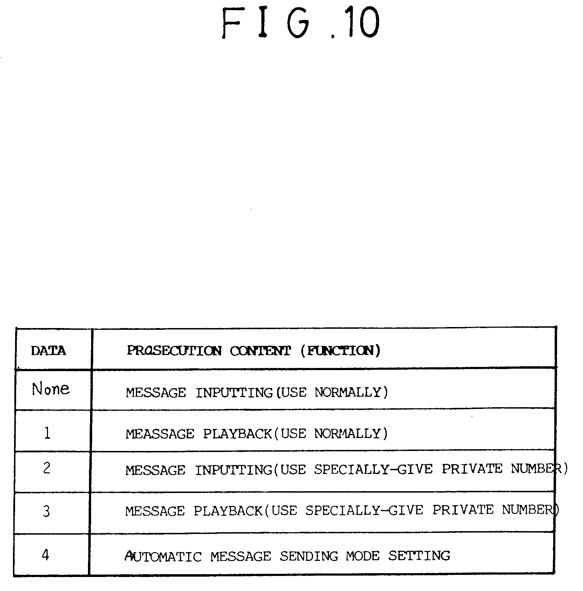

The control codes are code signals set on the program and inputted at the microcomputer via a key board, so as to carry out desired functions. Examples of such control codes are illustrated in FIG. 10 and a control procedure based thereon is shown in FIG. 7.

First, when no control code has been received, a normal automatic answering function is performed. That is, when a voice message received form an external telephone via the matching circuit 30 is converted into digital data via the voice message receiving circuit 110 and then inputted at the microcomputer 10, the microcomputer 10 stores the digital data in the message memory location in the RAM 92 of memory circuit 90.

Where the received control code is 1, a function for playing back and outputting a normally received message is carried out. In this case, the message recorded in the message memory location of the RAM 92 is played back and then outputted via the telephone line.

Where the received control code is 2, the microcomputer 10 outputs an information message for inputting a private number and discriminates whether the received private number corresponds to the set private number. When the received private number corresponds to the set private number, the microcomputer 10 outputs an information message for inputting a message and then stores a voice message received via the matching circuit 30 and the voice message input circuit 110 in a memory location corresponding to the private number. This function is to send a specific message to a counterpart who knows the private number.

Where the received control code is 3, the microcomputer 10 outputs an information message for inputting a private number. When the received private number corresponds to the set private number, the microcomputer 10 plays back a message recorded in a message memory location corresponding to the private number and outputs it via the telephone line.

Where the received control code is 4, a function for setting remotely the automatic message sending mode is carried out. That is, the microcomputer 10 first outputs an information message for inputting a message and stores a message received. Thereafter, the microcomputer 10 outputs an information message for inputting a telephone number and stores a telephone number received. The microcomputer 10 then outputs an information message for inputting a time and stores a time inputted, to set the automatic message sending mode. Thereafter, the microcomputer 10 outputs an information message informing that the setting of automatic message sending mode has been completed. As the microcomputer 10 counts down the set time, the automatic message sending mode is carried out, according to the procedure shown in FIG. 6.

The message sending apparatus according to the present invention may be applied to a home automation system, to achieve the above-mentioned functions in the home automation system. This can be accomplished by connecting the home automation system to the telephone line, equipping the system with all elements of the message sending apparatus shown in FIG. 2, and providing a program for carrying out the above-mentioned functions. For example, an on-screen display signal generating circuit of a television of the home automation system may be used as the LCD panel 71 of the display circuit 70. As the LCD panel 72, a Braun tube of the home automation system may be used. Other functional blocks of the message sending apparatus may be contained in the TV system of the home automation system. It is also possible to construct a message sending apparatus by increasing the capacity of a memory circuit of telephone, programming a microcomputer for providing a main control of telephone, to achieve the above-mentioned functions according to the present invention, and adding function keys.

As apparent from the above description, the present invention provides a message sending apparatus capable of recording a message via a telephone, automatically sending the message at a desired time by a telephone call and making the message be remotely received in user's absence by a telephone call.

The message sending apparatus also makes it possible to remotely play back a normally received message and send to the user when he makes a call for his home telephone. It is also possible to remotely play back and receive a specific message stored in a specific private number memory location and send the specific message to a specific counterpart who knows the private number. In addition, an automatic message sending mode can be remotely set so that a message can be automatically sent to a set telephone number at a desired time.

Although the preferred embodiments of the invention have been disclosed for illustrative purposes, those skilled in the art will appreciate that various modifications, additions and substitutions are possible, without departing from the scope and spirit of the invention as disclosed in the accompanying claims.

## Claims

1. A message sending apparatus comprising:
a microcomputer for controlling the whole operation of the apparatus including message recording/playback, automatic answering and telephone conversation;
speech path switching means for opening/closing a speech path to a telephone line under a control of a hook switch therein or under the control of said microcomputer;
matching means for matching transmission and reception signals with the telephone line when the speech path is formed by said speech path switching means;
DTMF transmitter/receiver means for modulating a transmission signal from said microcomputer into a DTMF signal and demodulating a reception signal from said matching means into a digital signal;
a handset for performing voice telephone conversation to the telephone line through said matching means;
key matrix means for inputting dialing key signals and function key signals for message recording/playback control and applying the inputted key signals to said microcomputer;
display means for displaying function states under the control of said microcomputer;
absence switching means for applying an absence signal to said microcomputer according to a user's selection;
memory means for recording and playing back a voice message under the control of said microcomputer;
microphone input means for inputting a voice message through a microphone under the control of said microcomputer;
voice message input means for converting voice messages inputted through said microphone input means, said matching means and said handset into digital signals and outputting the digital signals to said microcomputer;
voice message output means for converting a voice message from said microcomputer into an analog signal and outputting the analog signal to said matching means;
speaker output means for outputting an output signal from said voice message output means to a speaker under the control of said microcomputer; and
ring signal detecting means for detecting a ring signal from the telephone line and outputting the detected ring signal to said microcomputer.

2. A message sending method comprising:
a normal telephone conversation routine for controlling a telephone conversation to make and get a telephone call according to ON/OFF of a hook switch;
a function key control routine for receiving a function key signal, outputting an information message based on the received function key signal, storing telephone numbers, selecting one from the stored telephone numbers, automatically dialling the selected telephone number, giving a private number, storing a message, playing back the stored message, and controlling setting of an automatic message sending mode;
an automatic message sending routine for automatically dialing a stored telephone number at a set time in the automatic message sending mode and outputting a stored message at a telephone conversation enabling state; and
a control routine in user's absence for discriminating whether the current mode is a mode for user's absence, storing a received message based on a received control code, playing back the stored received message and setting the automatic message sending mode.

3. A message sending method in accordance with Claim 2, wherein the setting of the automatic message sending mode in the function key routine is controlled by the steps of:
outputting an information message for inputting a message in response to receipt of a key signal about the automatic message sending mode and storing a received digital voice signal;
outputting an guide message for inputting a telephone number in response to completion of storing the message, displaying the inputted telephone number on the display circuit and storing it;
outputting an information message for inputting a message sending start time in response to completion of storing the telephone number, displaying the inputted time on the display circuit and storing it, and outputting an information message for informing that the automatic message sending mode has been set.

4. A message sending method in accordance with Claim 2, wherein the automatic message sending routine comprises the steps of:
counting down the set time when the automatic message sending mode has been set in the function key routine and checking whether the counted-down time is zero;
switching on a relay switch when the counted-down time is zero, to establish a speech path, and automatically dialing the set telephone number;
discriminating whether the current state is a telephone conversation enabling state with a counterpart called by the automatic dialing;
outputting the stored message via the telephone line at the telephone conversation enabling state; and
switching of the relay switch in response to completion of outputting the message and returning the procedure to a standby state.

5. A message sending method in accordance with Claim 4, wherein the step of discriminating whether the current state is the telephone conversation enabling state comprises the steps of:
incrementing the number of telephone conversation attempt times when the current state is a telephone conversation disabling state and switching off the relay switch;
checking whether a predetermined time has elapsed when the number of telephone conversation attempt times is less than a predetermined number and returning the procedure to the step following the step of switching on the relay switch when the predetermined time has elapsed, to attempt the telephone conversation again; and
storing an information message for informing of disabling of the automatic message sending in a received message memory location when the number of telephone conversation attempt times is not less than the predetermined number and completing the automatic message sending mode, so that the telephone conversation is attempted predetermined times at the telephone conversation disabling state upon the dialing.

6. A message sending method in accordance with Claim 2, wherein the control routine in user's absence comprises the steps of:
switching on a relay switch upon receipt of a ring signal at ON state of an absence switch to establish a speech path;
outputting an information message for informing of the user's absence; and
reading a control code from received DTMF data, storing and playing back a normal message, storing and playing back a specific message based on a private number and performing setting of the automatic message sending mode, according to the control code.

7. A message sending method in accordance with Claim 6, wherein the control routine further comprises the steps of:
counting the number of ring signals received at OFF state of the absence switch;
controlling the procedure in a normal telephone conversation mode when the hook switch is switched to its OFF state before the number of ring signals is not less than a predetermined number; and
switching on the relay switch when the hook switch is not switched to its OFF state until the number of ring signals is not less than a predetermined number and performing the steps following the step of establishing the speech path.

8. A message sending method in accordance with Claim 6, wherein the step of controlling the procedure according to the control code comprises the steps of:
receiving a message in a normal automatic answering function mode when no control code has been received and storing it;
playing back and outputting the message received and stored when no control code was received, where a control code for playing back a received normal message has been received;
outputting an information message for inputting a private number where a control code for storing a message in a memory location for the private number has been received, outputting an information message for inputting a message when the inputted private number is identical to the given private number and storing a received message in a memory location corresponding to the private number;
outputting an information message for inputting a private number where a control code for playing back the message stored in the memory location for the private number has been received and playing back and outputting the message stored in the memory location for the private number when the inputted private number is identical to the given private number; and
outputting sequentially information messages for inputting a message, a telephone number and a time where a control code for setting the automatic message sending mode has been received, storing a received message, a received telephone number and a received time and setting remotely the automatic message sending mode.
